(19) Europäisches Patentamt
European Patent Office
Office européen des brevets

(11) **EP 2 750 942 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**21.12.2022 Patentblatt 2022/51**

(45) Hinweis auf die Patenterteilung:
**13.12.2017 Patentblatt 2017/50**

(21) Anmeldenummer: **12727599.8**

(22) Anmeldetag: **13.06.2012**

(51) Internationale Patentklassifikation (IPC):
**B60T 7/12** (2006.01)   **B60T 8/1755** (2006.01)
**B60T 13/26** (2006.01)   **B60T 13/38** (2006.01)
**B60T 13/66** (2006.01)   **B60T 17/22** (2006.01)
**B60T 8/24** (2006.01)

(52) Gemeinsame Patentklassifikation (CPC):
**B60T 8/17554; B60T 7/12; B60T 8/243;**
**B60T 13/385; B60T 13/662; B60T 13/683;**
**B60T 17/221**

(86) Internationale Anmeldenummer:
**PCT/EP2012/002494**

(87) Internationale Veröffentlichungsnummer:
**WO 2013/029703 (07.03.2013 Gazette 2013/10)**

(54) **VERFAHREN ZUR WARNUNG DES FAHRERS EINES FAHRZEUGES VOR EINEM DROHENDEN UMKIPPEN UND STEUERUNGSEINRICHTUNG DAFÜR**

METHOD FOR WARNING THE DRIVER OF A VEHICLE OF A RISK OF OVERTURNING AND CONTROL DEVICE THEREFOR

PROCÉDÉ DESTINÉ À AVERTIR LE CONDUCTEUR D'UN VÉHICULE D'UN RISQUE DE BASCULEMENT, AINSI QUE DISPOSITIF DE COMMANDE CONÇU À CET EFFET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.08.2011 DE 102011111862**

(43) Veröffentlichungstag der Anmeldung:
**09.07.2014 Patentblatt 2014/28**

(73) Patentinhaber: **ZF CV Systems Hannover GmbH**
**30453 Hannover (DE)**

(72) Erfinder:
• **RISSE, Rainer**
**30982 Pattensen-Reden (DE)**
• **STENDER, Axel**
**31787 Hameln (DE)**

(74) Vertreter: **Rabe, Dirk-Heinrich et al**
**ZF CV Systems Hannover GmbH**
**Am Lindener Hafen 21**
**30453 Hannover (DE)**

(56) Entgegenhaltungen:
EP-A1- 0 798 615       EP-A1- 0 919 445
EP-A2- 1 104 732       WO-A1-02/22416
WO-A1-02/24477        WO-A1-98/25779
WO-A1-02/074593       DE-A1- 10 017 045
DE-A1- 19 751 925      DE-A1- 19 907 633
DE-A1-102004 040 140    DE-C1- 19 602 879
DE-T2- 69 707 148       US-A1- 2008 272 899
US-B1- 6 554 293

EP 2 750 942 B2

**Beschreibung**

Die Erfindung betrifft ein Verfahren zur Warnung des Fahrers eines Fahrzeuges vor einem drohenden Umkippen des Fahrzeuges um seine Längsachse gemäß dem Oberbegriff des Anspruchs 1. Die Erfindung betrifft ferner eine Steuerungseinrichtung mit einem Programm mit Programmcodemitteln gemäß dem Anspruch 9.

Allgemein bezieht sich die Erfindung auf das Gebiet der Nutzfahrzeuge, nämlich der Zugfahrzeuge und Anhängefahrzeuge für den Straßenverkehr. Ein gattungsgemäßes Verfahren zur Warnung des Fahrers eines Fahrzeuges ist aus der US 6,498,976 B1 bekannt. Hierbei ist vorgesehen, dass der Fahrer vor einem drohenden Umkippen des Fahrzeugs bei Kurvenfahrt gewarnt wird, so dass er bei Bedarf z. B. durch ein Abbremsen die Fahrgeschwindigkeit derart anpassen kann, dass ein sicherer Fahrzustand erhalten bleibt. Die bekannten Verfahren und Einrichtungen sind dabei derart ausgestaltet, dass das Warnsignal dann erzeugt wird, wenn die momentane Querbeschleunigung des Fahrzeuges einen festen Schwellenwert überschreitet. Die Festlegung des Schwellenwertes ist in der Praxis mit einem Aufwand verbunden, insbesondere wenn es um viele unterschiedliche Fahrzeugarten geht. Zur Verbesserung dieser Situation wird in der US 6,498,976 B1 vorgeschlagen, den Schwellenwert insofern variabel zu gestalten, als dass er von der Fahrzeugmasse abhängig gemacht wird. Bei bekannter Fahrzeugmasse kann dann ein geeigneter Schwellenwert aus einer Tabelle entnommen werden.

Abgesehen davon, dass die Bestimmung der Daten für die Tabelle nach wie vor mit großem Aufwand verbunden ist, erlaubt die Fahrzeugmasse nur eine begrenzt präzise Aussage darüber, bei welcher tatsächlichen Querbeschleunigung das Fahrzeug um seine Längsachse umkippen würde. So erlaubt die Fahrzeugmasse insbesondere keine Aussage darüber, in welcher Höhe sich welche Ladung befindet, oder wie diese auf der Ladefläche verteilt ist. EP 1 104 732 A2 offenbart ein Verfahren zur Verhinderung des Umkippens eines Fahrzeugs, insbesondere eines Nutzfahrzeugs, vorgeschlagen. Hierzu werden mit Sensoren die Luftfederbalgdrücke und gleichzeitig mit einem Querbeschleunigungssensor oder über Raddrehzahl-Sensoren die Querbeschleunigung des Fahrzeugs erfasst. Aus dem so für eine bestimmte Beladung ermittelten Wertepaar wird eine Grenzbeschleunigung hochgerechnet, bei welcher der Luftfederbalgdruck des kurveninneren Rades auf Atmosphärendruck abgefallen ist. Falls während der Fahrt die aktuelle Querbeschleunigung des Fahrzeugs etwa 75 % der Grenzbeschleunigung erreichen sollte, wird die Geschwindigkeit des Fahrzeugs durch eine Fahrerwarnung, eine automatische Motordrosselung oder eine automatische Einbremsung verringert.

DE 196 02 879 C1 offenbart ein Fahrdynamik-Regelungsverfahren und eine entsprechende Vorrichtung für Kraftfahrzeuge, insbesondere für Nutzfahrzeuge, die mit einem ABS-System versehen sind, bei dem bei Blockierneigung der Bremsdruck im Sinne eines Verhinderns eines zu hohen Radschlupfes variiert wird, zeichnen sich dadurch aus, dass eine Abnahme der Kippstabilität des Fahrzeuges während einer Kurvenfahrt anhand eines Einsetzens eines ABS-Regel-Eingriffes ermittelt wird.

DE 199 07 633 A1 offenbart ein Verfahren zur Stabilisierung eines Fahrzeuges, vorzugsweise zur Vermeidung des Umkippens eines Fahrzeuges um eine in Längsrichtung des Fahrzeuges orientierte Fahrzeugachse. Hierzu wird eine die Querdynamik des Fahrzeuges beschreibende Größe ermittelt. Diese Größe wird mit wenigstens einem charakteristischen Wert, insbesondere einem Schwellenwert, für diese Größe verglichen. Für den Fall, bei dem die die Querdynamik des Fahrzeuges beschreibende Größe größer als der oder gleich dem charakteristischen Wert ist, wird die Geschwindigkeit des Fahrzeuges wenigstens durch Bremseneingriffe an wenigstens einem Rad und/oder durch Motoreingriffe und/oder durch Retardereingriffe auf einen vorgebbaren Geschwindigkeitswert reduziert oder auf einem vorgebbaren Geschwindigkeitswert gehalten.

Des Weiteren werden auch in US 2008/0272899 A1 und in WO 02/074593 A1 Verfahren zur Vermeidung des Umkippens von Fahrzeugen offenbart.

Der Erfindung liegt daher die Aufgabe zu Grunde, ein präziseres Verfahren zur Warnung des Fahrers eines Fahrzeuges vor einem drohenden Umkippen des Fahrzeuges um seine Längsachse anzugeben, bei dem der zuvor erwähnte Aufwand für die Bestimmung des Schwellenwertes oder der Tabellenwerte vermieden oder zumindest deutlich reduziert ist. Ferner soll eine hierfür geeignete Steuerungseinrichtung angegeben werden.

Die Aufgabe wird gelöst durch ein Verfahren zur Warnung des Fahrers eines Fahrzeuges vor einem drohenden Umkippen des Fahrzeugs um seine Längsachse, wobei eine Steuerungseinrichtung die momentane Querbeschleunigung des Fahrzeuges erfasst und hiervon abhängig ein Warnsignal bei drohendem Umkippen abgibt, wobei die Steuerungseinrichtung das Warnsignal zusätzlich in Abhängigkeit von wenigstens einem von der Steuerungseinrichtung im Fahrbetrieb des Fahrzeuges ermittelten kippkritischen Querbeschleunigungswert abhängig macht, der ein Maß für die Querbeschleunigung des Fahrzeuges ist, bei der das Fahrzeug tatsächlich um seine Längsachse umkippen würde, wobei der kippkritische Querbeschleunigungswert anhand des Fahrzeugverhaltens bei Kurvenfahrt von der Steuerungseinrichtung automatisch ermittelt wird.

Das Verfahren hat den Vorteil, dass nicht je nach Fahrzeugbauart und Beladung des Fahrzeuges ein spezifischer Schwellenwert oder Tabelleneintrag für die Erzeugung der Warnung des Fahrers eingegeben und zuvor durch Versuche ermittelt werden muss. Im Vergleich zu Verfahren mit festem Schwellenwert erlaubt die Erfindung eine an die aktuellen Bedingungen angepasste, realitätsnahe Warnung des Fahrers. Es wird vermieden, dass die Warnung unnötig früh, d. h. bei relativ geringer Querbeschleunigung, bereits erzeugt wird. Das Verfahren kann daher bei unterschiedlichsten Fahrzeugbauarten eingesetzt werden, wie z.B. Zugmaschinen, Aufliegern, Deichselanhängern, auch mit unterschiedlichen Aufbauten wie z.B. bei Container-Transporten, geschlossenen Kastenaufbauten oder Kippern. In Bezug auf die Umkippgefahr ist insbesondere die Spurweite des Fahrzeuges ein bestimmender Faktor der Fahrzeugbauart. Die Erfindung kann ohne besondere Anpassungen bei Fahrzeugen mit beliebigen Spurweiten eingesetzt werden.

Im Vergleich zu dem aus US 6,498,976 B1 hervorgehenden Verfahren wird eine deutlich präzisere und besser an die reale Fahrzeugsituation angepasste Warnung des Fahrers ermöglicht. Der kippkritische Querbeschleunigungswert reflektiert bei jeder Art der Beladung und Beladungsverteilung, jeder möglichen Fahrzeugausstattung und Spurweite eine jeweils angepasste Erzeugung des Warnsignals. Auch hierdurch werden Warnungen des Fahrers in unnötigen Fällen besser vermieden.

Gemäß einer vorteilhaften Ausgestaltung ist der kippkritische Querbeschleunigungswert ein Fahrzeugbauart- und Fahrzeugbeladungs-spezifisches Maß für die Querbeschleunigung des Fahrzeuges, bei der das Fahrzeug tatsächlich um seine Längsachse umkippen würde.

Das Fahrzeug kann ein Zugfahrzeug oder ein Anhängefahrzeug sein, wie z. B. ein Auflieger oder ein Deichselanhänger. Die Steuerungseinrichtung ist zur Bestimmung eines Maßes der momentanen Querbeschleunigung des Fahrzeuges eingerichtet. Hierzu kann die Steuerungseinrichtung z. B. das Signal eines Querbeschleunigungssensors auswerten oder auf Grund anderer Eingangssignale rechnerisch ein Maß für die Querbeschleunigung bestimmen, z. B. durch Auswertung der Drehgeschwindigkeiten der Räder des Fahrzeuges an der linken und der rechten Fahrzeugseite. Entsprechende Drehgeschwindigkeitsdifferenzen zwischen der linken und der rechten Fahrzeugseite sind ebenfalls ein Maß für die Querbeschleunigung des Fahrzeuges unter Berücksichtigung der Spurweite.

Der kippkritische Querbeschleunigungswert kann auf unterschiedliche Arten bestimmt und in der Steuerungseinrichtung gespeichert werden. So kann z. B. von der Steuerungseinrichtung die Radaufstandskraft von Rädern auf dem Boden erfasst werden, z. B. mittels eines Kraftsensors oder durch Auswertung des Balgdrucks von Luftfederbälgen, wenn das Fahrzeug mit einer Luftfederung ausgestattet ist. Hierbei wird bei Kurvenfahrt geprüft, wie stark die kurveninneren Räder des Fahrzeuges entlastet werden. Aus dem ermittelten Entlastungswert und dem dabei erfassten Querbeschleunigungswert kann der kippkritische Querbeschleunigungswert durch Hochrechnen bestimmt werden. Der kippkritische Querbeschleunigungswert entspricht dabei dem Zustand von zumindest nahezu vollständig entlasteten kurveninneren Rädern. In einer Ausgestaltung der Erfindung kann von der Steuerungseinrichtung auch die Raddrehgeschwindigkeit von einem oder mehreren kurveninneren Rädern des Fahrzeuges ausgewertet werden, um den kippkritischen Querbeschleunigungswert anhand des Fahrzeugverhaltens bei Kurvenfahrt zu ermitteln. Um eine definierte Änderung von Raddrehgeschwindigkeiten in Abhängigkeit von der Radaufstandskraft zu erzeugen, kann z. B. eine Testbremsung mit geringem Bremsdruck durchgeführt werden. Hierdurch tendieren stark entlastete Räder auf der kurveninneren Fahrzeugseite eher zu einer Reaktion auf den Bremsdruck, in der Art, dass sich die Raddrehgeschwindigkeiten charakteristisch verringern, was als Indikator für eine geringe Radbelastung gewertet werden kann.

Die Steuerungseinrichtung kann Teil eines elektronisch gesteuerten Bremssystems des Fahrzeuges oder eine separate Steuerungseinrichtung sein. Die Steuerungseinrichtung kann insbesondere als elektronische Steuerungseinrichtung ausgebildet sein.

Gemäß einer vorteilhaften Ausgestaltung der Erfindung wird der kippkritische Querbeschleunigungswert durch die Steuerungseinrichtung ausgehend von einem Anfangswert im Verlaufe einer oder mehrerer Kurvenfahrten des Fahrzeuges durch Auswertung wenigstens einer weiteren von der Steuerungseinrichtung erfassten Eingangsgröße adaptiv angepasst. Dies hat den Vorteil, dass sich die Steuerungseinrichtung durch die adaptive Anpassung des kippkritischen Querbeschleunigungswerts sozusagen an den fahrzeug- und beladungsspezifischen realen Wert der Querbeschleunigung herantasten kann, bei der ein Umkippen des Fahrzeuges zu befürchten ist.

Gemäß einer vorteilhaften Ausgestaltung der Erfindung wird der kippkritische Querbeschleunigungswert im Verlaufe einer oder mehrerer Kurvenfahrten des Fahrzeuges erhöht. Eine Verringerung des kippkritischen Querbeschleunigungswertes ist daher nicht vorgesehen. Hierdurch kann der kippkritische Querbeschleunigungswert nur in einer Richtung verändert werden, in der die Erzeugung des Warnsignals in jedem Fahrzustand ausreichend frühzeitig vor einem realen Umkippen des Fahrzeuges erzeugt wird.

Gemäß einer vorteilhaften Ausgestaltung der Erfindung wird während einer Kurvenfahrt eine Testbremsung an wenigstens einem kurveninneren Rad von der Steuerungseinrichtung ausgelöst, bei der das wenigstens eine kurveninnere Rad mit einer im Verhältnis zur höchstmöglichen Bremskraft geringen Bremskraft beaufschlagt wird, und das Raddrehgeschwindigkeitsverhalten wenigstens des einen mit der Testbremsung beaufschlagten Rades wird für die adaptive Anpassung des kippkritischen Querbeschleunigungswertes herangezogen. Dies hat den Vorteil, dass mit den in einem elektronisch gesteuerten Bremssystem vorhandenen Mitteln ein Maß für die Bodenhaftung des wenigstens einen kurveninneren Rades gewonnen werden kann und zugleich als Indikator für die kippkritische Querbeschleunigung des Fahrzeuges verwendet werden kann, bei der das Fahrzeug tatsächlich um seine Längsachse umkippen würde. Ein weiterer Vorteil ist, dass das erfindungsgemäße Verfahren gut kombinierbar ist mit einem Verfahren zur Vermeidung des Umkippens eines Fahrzeuges um seine Längsachse, wie z. B. aus DE 100 17 045 A1 bekannt, bei dem durch einen aktiven Bremseingriff, der durch die Steuerungseinrichtung automatisch ausgelöst wird, die Fahrzeuggeschwindigkeit in kippkritischen Situationen vermindert wird.

Gemäß einer vorteilhaften Ausgestaltung der Erfindung ist die Steuerungseinrichtung daher zusätzlich zur Ausführung eines Verfahrens zur Vermeidung des Umkippens eines Fahrzeugs um seine Längsachse eingerichtet, bei dem bei drohender Gefahr des Umkippens automatisch eine Bremsung eingeleitet wird, indem wenigstens ein Rad des Fahrzeuges automatisch durch die Steuerungseinrichtung mit Bremskraft beaufschlagt wird.

Gemäß einer vorteilhaften Ausgestaltung der Erfindung wird der kippkritische Querbeschleunigungswert um einen Stufenwert erhöht, wenn festgestellt wird, dass die Testbremsung nicht zu einer charakteristischen Verringerung der Raddrehgeschwindigkeit wenigstens eines mit dem geringen Bremsdruck gebremsten Rades führt. Sofern die charakteristische Verringerung auftritt, z.B. in Form eines Blockierens des Rades (Raddrehgeschwindigkeit = 0), erfolgt keine weitere Erhöhung des kippkritischen Querbeschleunigungswert. In diesem Fall kann davon ausgegangen werden, dass der bis dahin ermittelte kippkritische Querbeschleunigungswert in guter Näherung das tatsächliche Maß der Querbeschleunigung wiedergibt, bei der das Fahrzeug tatsächlich um seine Längsachse umkippen würde. Gemäß einer vorteilhaften Weiterbildung der Erfindung speichert die Steuerungseinrichtung die Tatsache, dass eine charakteristische Verringerung der Raddrehgeschwindigkeit in Folge der Testbremsung aufgetreten ist und unterbindet dann weitere Erhöhungen des kippkritischen Querbeschleunigungswertes, auch wenn bei weiteren Testbremsungen mit einer Querbeschleunigung im Bereich des kippkritischen Querbeschleunigungswertes keine charakteristische Verringerung der Raddrehgeschwindigkeit erkannt wird. Die Speicherung und Verhinderung der Erhöhung des kippkritischen Querbeschleunigungswertes kann dauerhaft oder temporär, z. B. bis zum Ende der Fahrt, erfolgen.

Der genannte Stufenwert, um den der kippkritische Querbeschleunigungswert jeweils erhöht wird, kann ein vorgegebener fester Wert oder ein variabler Wert sein. Vorteilhaft ist z. B. die Verwendung eines im Verlauf der Fahrt abklingenden Stufenwertes, z. B. nach einer abklingenden Exponentialfunktion oder einer abklingenden Hyperbelfunktion. So kann z. B. der Stufenwert ausgehend von einem Anfangswert bei jedem Erhöhen des kippkritischen Querbeschleunigungswertes für die nächste Erhöhung des kippkritischen Querbeschleunigungswertes verringert werden, z. B. um einen vorbestimmten Prozentsatz. Dies erlaubt eine besonders feinfühlige adaptive Anpassung an die Querbeschleunigung des Fahrzeuges, bei der das Fahrzeug tatsächlich um seine Längsachse umkippen würde.

Gemäß einer vorteilhaften Ausgestaltung der Erfindung wird das Warnsignal als optisches und akustisches Signal ausgegeben. Dies erlaubt die Ausgabe von Warnmeldungen, die für den Fahrer leicht und intuitiv verständlich sind. Das akustische Signal kann z. B. ein Warnton oder eine Warnung in Form einer Sprachausgabe sein. Als optisches Signal kann z. B. eine Warnleuchte eingeschaltet werden oder Warnhinweise auf einem Anzeigedisplay des Fahrzeuges ausgegeben werden.

Gemäß einer vorteilhaften Ausgestaltung der Erfindung wird das Warnsignal erzeugt, wenn die momentane Querbeschleunigung bezogen auf den kippkritischen Querbeschleunigungswert einen Grenzwert überschreitet. Als momentane Querbeschleunigung bezogen auf den kippkritischen Querbeschleunigungswert kann z. B. der Quotient aus der momentanen Querbeschleunigung und dem kippkritischen Querbeschleunigungswert oder die Differenz aus der momentanen Querbeschleunigung und dem kippkritischen Querbeschleunigungswert herangezogen werden und betragsmäßig mit dem Grenzwert verglichen werden.

Gemäß der Erfindung wird als Warnsignal die momentane Querbeschleunigung des Fahrzeuges bezogen auf den kippkritischen Querbeschleunigungswert optisch dargestellt. Dies erlaubt eine besonders einfache und intuitive Erfassung des aktuellen Risikos für ein Umkippen des Fahrzeuges durch den Fahrer. Der Fahrer kann besonders intuitiv hierauf reagieren und die Geschwindigkeit des Fahrzeuges entsprechend anpassen.

Gemäß der Erfindung wird die momentane Querbeschleunigung des Fahrzeuges bezogen auf den kippkritischen Querbeschleunigungswert in der Art eines künstlichen Horizonts dargestellt. Dies vermittelt dem Fahrer des Fahrzeuges einen besonders realitätsnahen Eindruck von der seitlichen Neigung des Fahrzeuges und insbesondere von kippkritischen Situationen. Der künstliche Horizont kann z. B. anhand einer grafischen Animation auf einem grafikfähigen Display oder, wenn eine optische Darstellung mit geringerem Aufwand erzeugt werden soll, durch Leuchtbalkenanzeigen erfolgen. Der mit dem künstlichen Horizont wiedergegebene Neigungswinkel des Fahrzeugaufbaus gegenüber der Horizontalen kann dabei direkt aus dem Quotienten der momentanen Querbeschleunigung bezogen auf den kippkritischen Querbeschleunigungswert oder aus der Differenz beider Werte bestimmt werden. Zusätzlich kann bei Erreichen oder Annähern an den kippkritischen Wert, z. B. bei betragsmäßigem Überschreiten des zuvor genannten Grenzwerts, eine zusätzliche optische und/oder akustische Warnung ausgegeben werden, z. B. durch Ausgabe von roten Warnsignalen auf dem Display oder durch Warntöne.

Gemäß einer vorteilhaften Ausgestaltung der Erfindung bestimmt die Steuerungseinrichtung einen ersten kippkritischen Querbeschleunigungswert, der ein Maß für die Querbeschleunigung des Fahrzeuges bei Linkskurven ist, bei der das Fahrzeug bei Linkskurven tatsächlich um seine Längsachse umkippen würde. Zusätzlich bestimmt die Steuerungseinrichtung einen zweiten kippkritischen Querbeschleunigungswert, der ein Maß für die Querbeschleunigung des Fahrzeuges ist, bei der das Fahrzeug in Rechtskurven tatsächlich um seine Längsachse umkippen würde. Dies hat den Vorteil, dass jeweils eine separate Information darüber vorliegt, bei welcher Querbeschleunigung jeweils in einer Linkskurve oder in einer Rechtskurve eine Umkippgefahr besteht. Die Warnung des Fahrers bzw. die optischen und akustischen Ausgaben werden von der Steuerungseinrichtung dann je nach dem, ob das Fahrzeug eine Rechtskurve oder eine Linkskurve durchfährt, unter Heranziehung entweder des ersten kippkritischen Querbeschleunigungswertes oder des zweiten kippkritischen Querbeschleunigungswertes bestimmt. Dies erlaubt eine zusätzliche Differenzierung bei der Erzeugung der Warnung bei unsymmetrisch gebauten Fahrzeugen oder unsymmetrischer Beladung des Fahrzeuges. So kann z. B. ein Anhängefahrzeug nur einseitig, z. B. rechts oder links, schwer beladen sein, so dass je nach Kurvenrichtung unterschiedliche kippkritische Querbeschleunigungswerte vorliegen können.

Die eingangs genannte Aufgabe wird zudem durch eine Steuerungseinrichtung mit einem Programm mit Programmcodemitteln gelöst, die eingerichtet ist zur Ausführung eines Verfahrens der zuvor beschriebenen Art, wenn das Programm auf einen Rechner der Steuerungseinrichtung ausgeführt wird. Die Steuerungseinrichtung kann z. B. als elektronische Steuerungseinrichtung mit einem Rechner ausgebildet sein, z. B. als Teil eines elektronisch gesteuerten Bremssystems des Fahrzeuges.

Die Erfindung wird nachfolgend anhand von Ausführungsbeispielen unter Verwendung von Zeichnungen näher erläutert.

Figur 1 ein Fahrzeug in einer Linkskurve in Draufsicht und

Figuren 2, 3 und 4 Verfahrensschritte in Flussdiagramm-Darstellung und

Figur 5 eine optische Darstellung von Querbeschleunigungswerten in einer ersten Ausführungsform und

Figur 6 eine optische Darstellung von Querbeschleunigungswerten in einer zweiten Ausführungsform.

In den Figuren werden gleiche Bezugszeichen für einander entsprechende Elemente verwendet.

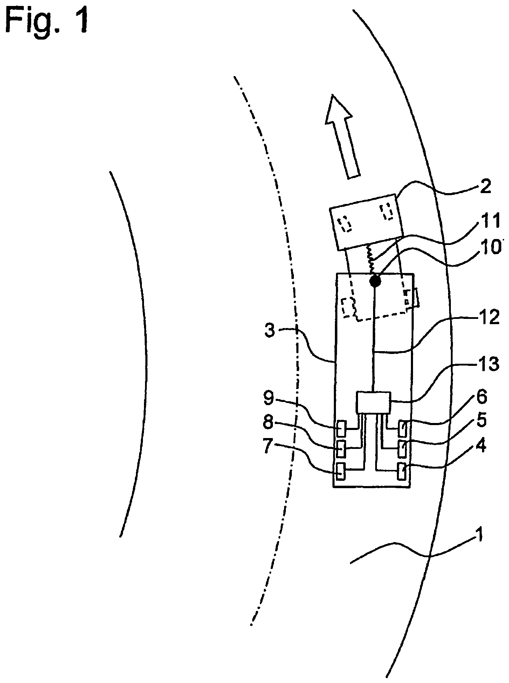

In der Figur 1 ist ein auf einer Straße 1 in einer Linkskurve befindliches Fahrzeug 2, 3, hier bestehend aus Sattelzugmaschine 2 und Auflieger 3, in Draufsicht dargestellt. Die Erfindung ist jedoch nicht auf einen solchen Fahrzeugtyp beschränkt. Der Auflieger 3 weist eine Bremsanlage pneumatischen Typs auf, welche von der Sattelzugmaschine 2 infolge einer Bremspedalbetätigung durch den Fahrer oder infolge bestimmter Steuer- und Regelfunktionen in dem Fahrzeug mit Bremsdruck beaufschlagbar ist. Hierzu ist die Sattelzugmaschine 2 über elektrische und pneumatische Leitungen 11 mit dem Auflieger 3 verbunden.

Die Sattelzugmaschine 2 und der Auflieger 3 sind an einem Drehpunkt 10 drehbar miteinander verbunden.

Die Bremsanlage des Aufliegers 3 weist z. B. elektrisch betätigbare Komponenten wie z. B. ABS-Bremsdruckmodulatoren oder auch rein elektrisch betätigbare Bremsaktuatoren auf. Die Bremsmodulatoren bzw. Bremsaktuatoren werden von einer Steuerungseinrichtung 13 in Form eines elektronischen Steuergeräts gesteuert. Das Steuergerät 13 und die Bremsmodulatoren bzw. Bremsaktuatoren werden über elektrische und pneumatische Leitungen 12 mit elektrischer Energie und dem Druckmittel bzw. der Bremsenergie versorgt. Dem elektronischen Steuergerät 13 werden zudem noch Drehgeschwindigkeiten $v_4$, $v_5$, $v_7$, $v_8$ der Räder 4, 5, 7, 8 in einer bei Antiblockiersystemen her bekannten Weise zugeführt.

Im vorliegenden Fall sind somit die Räder 4, 5, 6 die kurvenäußeren Räder des Aufliegers, und die Räder 7, 8, 9 die kurveninneren Räder.

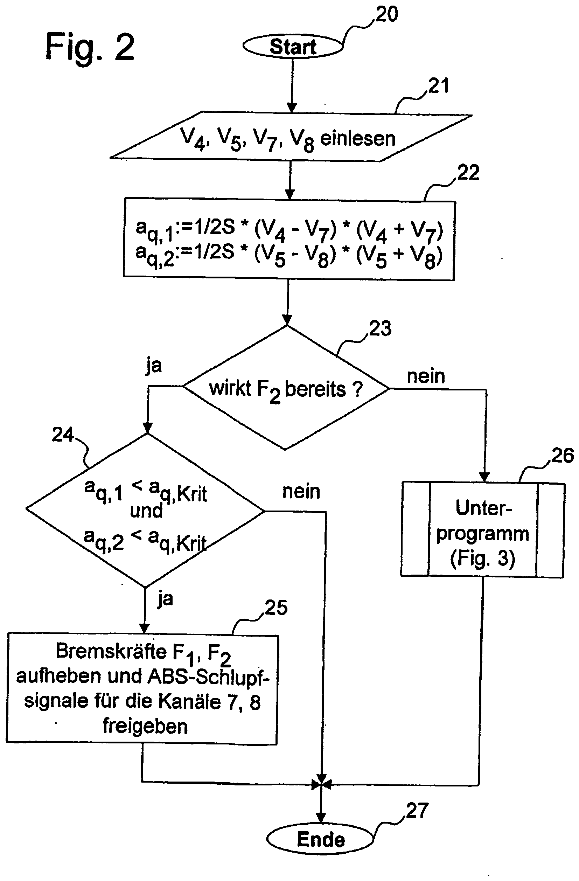

Das elektronische Steuergerät 13 führt eine Reihe von Steuerungs- und Regelungsaufgaben in dem Auflieger 3 aus. Einer dieser Steuerungs- und Regelungsaufgaben besteht darin, die Gefahr des Umkippens des Fahrzeuges 2, 3 um seine Längsachse zu erkennen und durch gezielten Bremseingriff zu verhindern, wie dies anhand der Figur 2 mittels eines Flussdiagramms beispielhaft dargestellt wird.

Das Verfahren gemäß Figur 2 beginnt mit einem Block 20. In einem darauf folgenden Block 21 werden die Drehgeschwindigkeiten $v_4$, $v_5$, $v_7$, $v_8$ der Räder 4, 5, 7, 8 eingelesen. Sodann wird in einem Zuweisungsblock 22 aus den Drehgeschwindigkeiten $v_4$, $v_7$ ein erstes Querbeschleunigungssignal $a_{q,1}$ und aus den Drehgeschwindigkeiten $v_5$, $v_8$ ein zweites Querbeschleunigungssignal $a_{q,2}$ gemäß folgenden Formeln ermittelt:

$$a_{q,1} = \frac{1}{2 \bullet S} \bullet v_4 - v_7 \bullet v_4 + v_7 \qquad [1]$$

$$a_{q,2} = \frac{1}{2 \bullet S} \bullet v_5 - v_8 \bullet v_5 + v_8 \qquad [2]$$

Die Größe S stellt hierbei die Spurweite des Fahrzeugs dar. Die Querbeschleunigungssignale $a_{q,1}$, $a_{q,2}$ sind jeweils ein Maß für die momentane Querbeschleunigung des Fahrzeuges 2, 3. Die Querbeschleunigungssignale $a_{q,1}$, $a_{q,2}$ werden im folgenden Verfahrensablauf gemeinsam verwendet statt eines einzigen, beispielsweise aus den Drehgeschwindigkeiten $v_4$, $v_5$, $v_7$, $v_8$ ermittelten Querbeschleunigungssignals. Hierdurch ist das Verfahren weniger störanfällig gegenüber Signalstörungen, unterschiedlichen Reifendurchmessern und ähnlichem, so dass ein Fehlansprechen des Verfahrens vermieden werden kann.

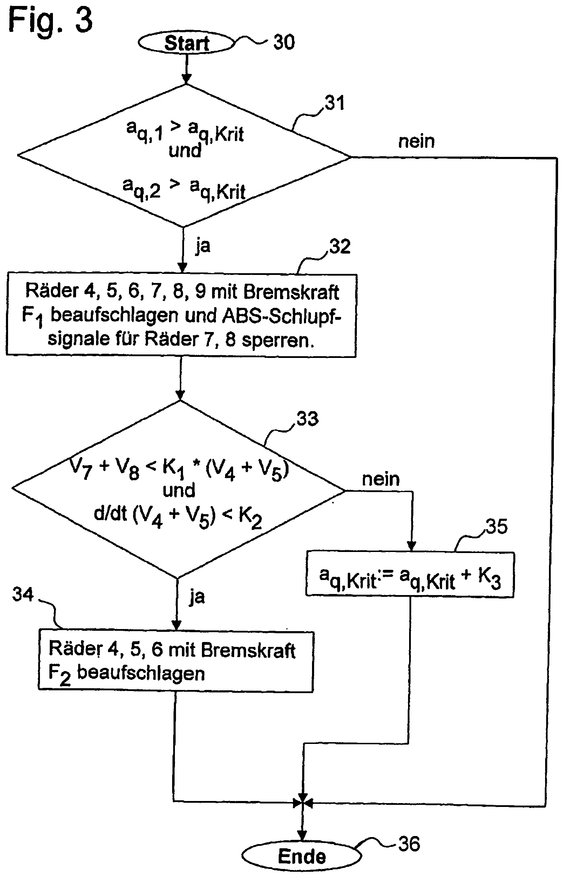

In einem Verzweigungsblock 23 wird sodann überprüft, ob die Bremsanlage bereits bei einer früheren Ausführung des in den Figur 2, 3 und 4 dargestellten Ablaufs mit einer Bremskraft $F_2$ zur Vermeidung des Umkippens beaufschlagt wurde. Wenn dies der Fall ist, wird unter Umgehung des nachfolgend anhand der Figur 3 noch näher erläuterten Unterprogrammblocks 26, welcher unter anderem zur Erkennung der Umkippgefahr dient, direkt zu dem Block 24 verzweigt, wo geprüft wird, ob die Gefahr des Umkippens nicht mehr vorliegt.

Ansonsten wird mit dem in der Figur 3 dargestellten Unterprogrammblock 26 fortgefahren, der mit einem Block 30 beginnt. In einem darauf folgenden Verzweigungsblock 31 wird überprüft, ob sowohl das erste Querbeschleunigungssignal $a_{q,1}$ als auch das zweite Querbeschleunigungssignal $a_{q,2}$ eine für ein Ansprechen des Verfahrens festgelegte Querbeschleunigungsschwelle $a_{q,Krit}$ überschreiten. Die Querbeschleunigungsschwelle $a_{q\,Krit}$ entspricht dabei dem kippkritischen Querbeschleunigungswert. Wenn dies der Fall ist, werden in einem Block 32 die Räder 4, 5, 6, 7, 8, 9 des Aufliegers 3 mit einer relativ geringen Bremskraft $F_1$ beaufschlagt. Die Bremskraft $F_1$ ist derart festgelegt, dass nur eine relativ geringe, für den Fahrer kaum spürbare Bremswirkung eintritt und insbesondere auch auf Fahrbahnen mit relativ hohem Reibwert kein Blockieren von Rädern auftritt, sofern keine Umkippgefahr vorliegt. In Druckluftbremsanlagen derzeit üblicher Bauart wird zur Aufbringung der Bremskraft $F_1$ ein Bremsdruck von etwa 1 bis 2 bar eingesteuert.

Des Weiteren werden in dem Block 32 die ABS-Schlupfsignale für die Räder 7, 8 gesperrt, um ein Anregeln der Antiblockierfunktion aufgrund hohen Schlupfes zu vermeiden. Ein Anregeln aufgrund von Beschleunigungssignalen ist weiterhin möglich, so dass mögliche Beschädigungen an den Reifen vermieden werden können.

In einem darauf folgenden Verzweigungsblock 33 wird nach Abklingen einer ausreichenden Einschwingzeit des Bremsdruckaufbaus bzw. des Aufbaus der Bremskraft $F_1$ überprüft, ob die Drehgeschwindigkeiten $v_7$, $v_8$ der kurveninneren Räder 7, 8 in charakteristischer Weise geringer sind als die Drehgeschwindigkeiten $v_4$, $v_5$ der kurvenäußeren Räder 4, 5, während die Drehgeschwindigkeiten der kurvenäußeren Räder im wesentlichen unverändert bleiben. Ersteres wird durch Vergleich der Summe der Drehgeschwindigkeiten $v_7$, $v_5$ der kurvenäusseren Räder mit der mit einem Faktor $K_1$ bewerteten Summe der Drehgeschwindigkeiten $v_4$, $v_5$ der kurveninneren Räder überprüft, Letzteres wird anhand der Summe der Verzögerungen der Räder 4, 5, d. h. der ersten zeitlichen Ableitung der zugeordneten Drehgeschwindigkeiten $v_4$, $v_5$, überprüft. Die Überprüfung der kurvenäusseren Räder 4, 5 auf weiterhin relativ hohe Drehgeschwindigkeiten dient zur Vermeidung von Fehlansprechen des Verfahrens bei relativ niedrigen Reibwerten, z. B. auf Eis. Dort kann es vorkommen, dass sich nicht nur die Drehgeschwindigkeiten der kurveninneren Räder aufgrund der als Testbremsung aufgewendeten Bremskraft $F_1$ wie beabsichtigt verringern, sondern auch die Drehgeschwindigkeiten $v_4$, $v_5$ der höher belasteten kurvenäußeren Räder 4, 5. In diesem Fall deutet die Geschwindigkeitsverringerung der kurveninneren Räder 7, 8 nicht auf ein unmittelbar bevorstehendes Umkippen des Fahrzeugs 2, 3 hin.

Wenn die zuvor genannten Bedingungen beide erfüllt sind, ist von einer unmittelbar drohenden Umkippgefahr auszugehen. Daher werden in einem nun folgenden Block 34 die den besseren Kraftschluss zwischen Fahrbahn und Reifen aufweisenden kurvenäußeren Räder 4, 5, 6 mit einer im Verhältnis zur Bremskraft $F_1$ hohen Bremskraft $F_2$ beaufschlagt. Die Bremskraft $F_2$ ist derart bemessen, dass durch eine Verringerung der Fahrzeuggeschwindigkeit die Querbeschleunigung und damit auch die Umkippgefahr umgehend verringert wird. Der physikalische Zusammenhang zwischen der Querbeschleunigung $a_q$ des Fahrzeuges und der Fahrzeuggeschwindigkeit v ist durch die nachfolgend angegebene Gleichung festgelegt, wobei die Größe R den Kurvenradius angibt:

$$a_q = \frac{v^2}{R} \qquad\qquad [3]$$

Ein Blockieren der mit der Bremskraft $F_2$ beaufschlagten Räder wird durch das Antiblockiersystem verhindert. Die kurveninneren Räder 7, 8, 9 sind weiterhin mit der geringen Bremskraft $F_1$ beaufschlagt. Zur Erzeugung der Bremskraft $F_2$ wird bei einer herkömmlichen druckluftgesteuerten Bremsanlage vorzugsweise ein Druck von 4 bis 8 bar eingesteuert.

Das Unterprogramm endet sodann mit einem Block 36.

Falls die in dem Verzweigungsblock 23 in der Figur 2 überprüfte Bedingung zu bejahen ist, wird in der Figur 2 in einem darauf folgenden Verzweigungsblock 24 geprüft, ob sowohl das erste Querbeschleunigungssignal $a_{q,1}$ als auch das zweite Querbeschleunigungssignal $a_{q,2}$ die Querbeschleunigungsschwelle $a_{q,Krit}$ unterschreiten. Wenn dies der Fall ist, liegt keine Gefahr des Umkippens mehr vor, und es können in einem nachfolgenden Block 25 die Bremskräfte $F_1$, $F_2$ aufgehoben und die in dem Block 32 gesperrten ABS-Schlupfsignale wieder freigegeben werden. Anderenfalls wird unter Umgehung des Blockes 25 direkt zu einem Block 27 verzweigt, mit dem das Verfahren endet.

Die Funktionsweise der Erfindung und insbesondere die Verwendung der Querbeschleunigungssignale $a_{q,1}$, $a_{q,2}$ kann wie folgt veranschaulicht werden. Die bei Umkippgefahr mit geringer Radlast beaufschlagten kurveninneren Räder 7, 8, 9 tendieren zu einer Verringerung der Drehgeschwindigkeit infolge der Bremskraft $F_1$ der Testbremsung. Dies bewirkt wiederum eine relativ große Drehgeschwindigkeitsdifferenz zwischen den kurveninneren und den kurvenäußeren Rädern. Diese führt bei Anwendung der Gleichungen [1] und [2] zu einem rapiden Anstieg der ersten und der zweiten Querbeschleunigungssignale $a_{q,1}$, $a_{q,2}$. Im umgekehrten Fall führt das Wiederaufsetzen der kurveninneren Räder 7, 8, 9, z. B. infolge der Abbremsung mit der Bremskraft $F_2$ in dem Block 34, dazu, dass die berechneten Querbeschleunigungssignale $a_{q,1}$, $a_{q,2}$ sich rapide verringern. Wegen der rapiden Veränderung der Querbeschleunigungssignale kann die Testbremsung, welche die mit geringer Radlast behafteten bzw. in der Luft befindlichen Räder bei Umkippgefahr zum Stillstand bringt, für eine sichere Erkennung des Wiederaufsetzens der Räder bzw. der Beendigung der Umkippgefahr benutzt werden, da die kurveninneren Räder dann aufgrund der sich erhöhenden Radlast trotz der durch die Bremskraft $F_1$ bewirkten Bremswirkung wieder anlaufen, was zu einem charakteristischen Anstieg der Drehgeschwindigkeiten $v_7$, $v_8$ dieser Räder führt.

Falls in der Figur 3 eine oder beide der in dem Verzweigungsblock 33 überprüften Bedingungen nicht erfüllt ist, so wird unter Ausführung des Zuweisungsblocks 35, in welchem die Querbeschleunigungsschwelle $a_{q,Krit}$ um den Wert $K_3$ erhöht wird, zu dem Block 36 verzweigt, mit dem das Verfahren endet.

Wenn eine oder beide der in dem Verzweigungsblock 31 überprüften Bedingungen nicht erfüllt sind, dann wird zu dem Block 36 verzweigt, mit dem das Verfahren endet.

Das Verfahren ist im Übrigen auch für Fahrzeuge mit nur einer Achse bzw. mit nur einer mit Drehgeschwindigkeitssensoren bestückten Achse geeignet.

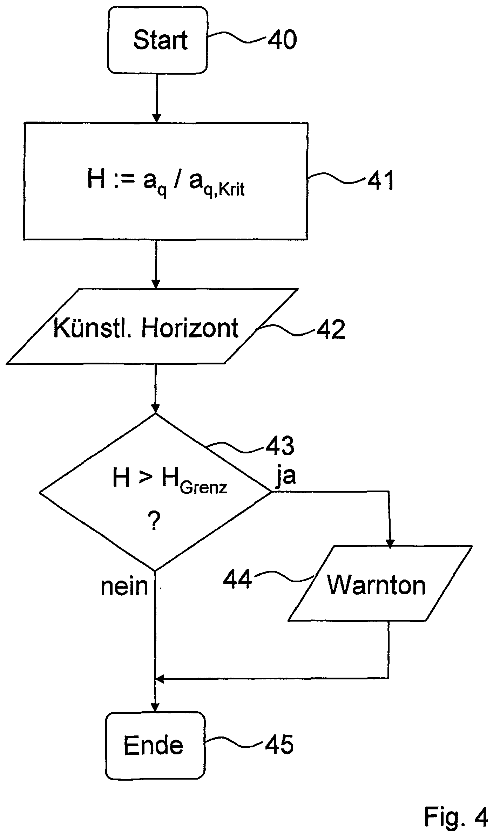

Die Figur 4 zeigt ein Verfahren zur Warnung des Fahrers des Fahrzeuges 2, 3 unter Verwendung der momentanen Querbeschleunigung des Fahrzeuges und dem kippkritischen Querbeschleunigungswert. Das Verfahren beginnt mit einem Block 40. In einem darauf folgenden Block 41 wird ein Risikowert H als Quotient der momentanen Querbeschleunigung $a_q$ und dem kippkritischen Querbeschleunigungswert $a_{q,Krit}$ bestimmt, für den die im Block 35 gemäß Figur 3 bestimmte Querbeschleunigungsschwelle herangezogen wird. Als momentane Querbeschleunigung $a_q$ kann z. B. der Mittelwert aus $a_{q,1}$ und $a_{q,2}$ verwendet werden. In einem darauf folgenden Block 42 erfolgt eine optische Ausgabe des Risikowerts H in der Art eines künstlichen Horizontes, wie nachfolgend noch erläutert. Der Risikowert H kann dabei z. B. direkt proportional in eine Neigung des künstlichen Horizontes gegenüber der Horizontalen umgerechnet werden.

In einem darauf folgenden Verzweigungsblock 43 wird geprüft, ob der Risikowert H einen Risikogrenzwert $H_{Grenz}$ überschreitet. Wenn dies der Fall ist, wird zu einem Ausgabeblock 44 verzweigt, wo die Ausgabe eines Warntons ausgelöst wird. Das Verfahren endet dann in einem Block 45.

Die Ausgabe der Warnung kann z. B. dann erfolgen, wenn die momentane Querbeschleunigung des Fahrzeuges 95 % des kippkritischen Querbeschleunigungswertes betragsmäßig erreicht oder überschreitet.

Der Fahrer wird hierdurch nicht unnötig vor einer drohenden Umkippgefahr des Fahrzeuges gewarnt. Speziell bei unbeladenen Fahrzeugen droht keine Umkippgefahr, so dass unnötige Warnungen vermieden werden und damit Irritationen des Fahrers vermieden werden können.

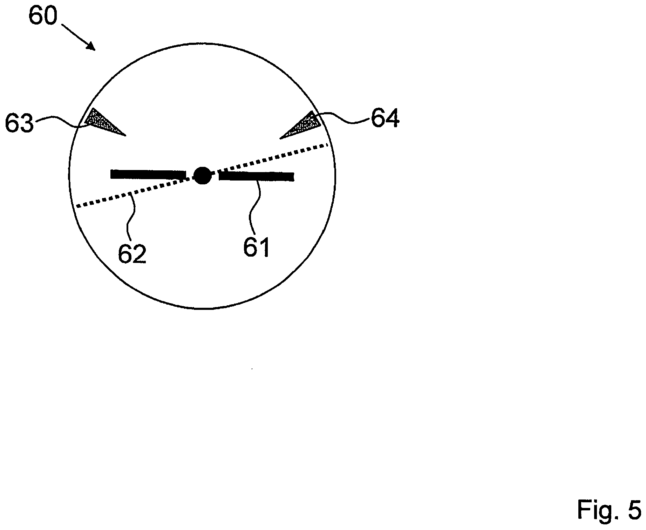

Die Figur 5 zeigt schematisch eine optische Darstellung der momentanen Querbeschleunigung des Fahrzeuges bezogen auf den kippkritischen Querbeschleunigungswert in der Art eines künstlichen Horizonts in einer ersten Ausführungsform. Es kann z. B. auf einem grafikfähigen Display des Fahrzeuges eine Animation eines künstlichen Horizonts mit einem Anzeigebereich 60 dargestellt werden. Innerhalb des Anzeigebereichs 60 zeigt eine waagerechte Balkenanordnung 61 die Horizontale an. Eine bezüglich der Schräglage variable Linie 62 zeigt einen künstlichen Horizont an, wie er der Wahrnehmung des Fahrers des Fahrzeuges bei entsprechender Schräglage des Fahrzeuges entsprechen würde. Die Figur 5 zeigt beispielhaft die Darstellung bei einer Linkskurve. Der Winkel zwischen der Linie 62 und der Balkenanordnung 61 ist ein Maß für die momentane Querbeschleunigung des Fahrzeuges, wobei wahlweise hierfür die momentane Querbeschleunigung direkt verwendet werden kann, oder bezogen auf den kippkritischen Querbeschleunigungswert. Warnmarkierungen 63, 64 zeigen an, wo sich der kippkritische Wert für die Querbeschleunigung befindet. Erreicht die Linie 62 eine der Warnmarkierungen 63, 64, so befindet sich das Fahrzeug in einem gefährlichen Zustand, in dem ein Umkippen um die Längsachse droht.

Die Warnmarkierungen 63, 64 können bei der optischen Ausgabe des künstlichen Horizonts 60 von der Steuerungseinrichtung an einer gewünschten Stelle eingeblendet werden, die dem kippkritischen Querbeschleunigungswert entspricht, d. h. zahlenmäßig aus diesem berechnet wird. In diesem Fall wird die Linie 62 direkt nach Maßgabe der momentanen Querbeschleunigung dargestellt, wobei sich auf Grund der optischen Ausgabe der Bezug zu dem kippkritischen Querbeschleunigungswert anhand der Warnmarkierungen 63, 64 ergibt. In diesem Fall ist keine Quotientenbildung oder Differenzbildung aus der momentanen Querbeschleunigung und dem kippkritischen Querbeschleunigungswert erforderlich. Es kann auch vorgesehen sein, dass die Warnmarkierungen 63, 64 an festen Positionen eingeblendet werden. In diesem Fall ist es vorteilhaft, die Linie 62 bezüglich ihrer Schräglage anhand einer rechnerischen Bezugnahme zwischen der momentanen Querbeschleunigung und dem kippkritischen Querbeschleunigungswert zu bestimmen, z. B. durch die erwähnte Quotientenbildung oder die Differenzbildung.

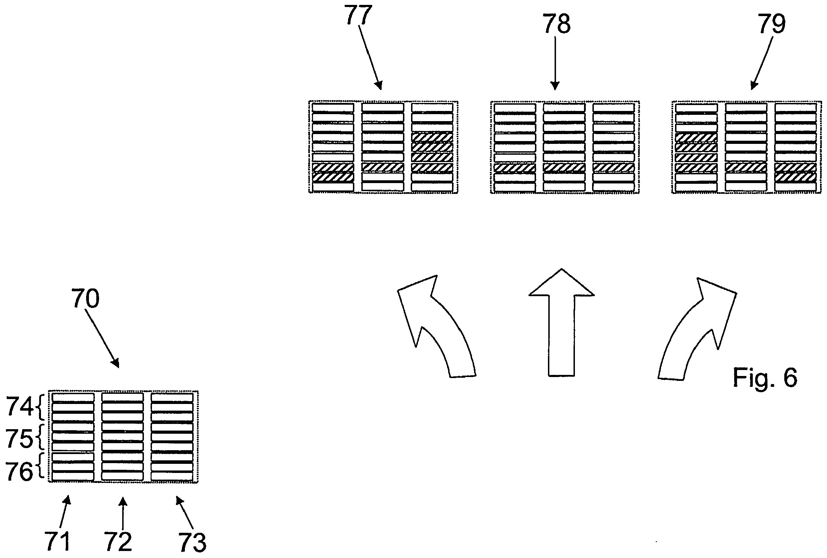

Die Figur 6 zeigt eine zweite Ausführungsform der optischen Darstellung der momentanen Querbeschleunigung bezogen auf den kippkritischen Querbeschleunigungswert in der Art eines künstlichen Horizonts. Links unten in der Figur 6 ist in einem Block 70 ein Ausgabedisplay dargestellt, das aus drei nebeneinander angeordneten Balkenanzeigen 71, 72, 73 besteht, z. B. gebildet durch Leuchtdioden. Jede der Balkenanzeigen 71, 72, 73 kann mit Blöcken verschiedenfarbiger Leuchtdioden ausgebildet sein, z. B. im unteren Bereich mit einem Block 76 grüner Leuchtdioden, in der Mitte mit einem Block 75 gelber Leuchtdioden und im oberen Bereich mit einem Block 74 roter Leuchtdioden. Hierbei wird durch die Farben die Sicherheit bzw. das Risiko des Fahrzustandes signalisiert, wobei grün für ein geringes Risiko und rot für ein hohes Risiko steht.

Im rechten Bereich der Figur 6 wird beispielhaft anhand einer Linkskurve des Fahrzeuges (Block 77), einer Geradeausfahrt (Block 78) und einer Rechtskurve (Block 79) die Art der Anzeige erläutert. Aufleuchtende Leuchtdioden sind dabei durch eine Schraffur gekennzeichnet. Die unter den Blöcken dargestellten Pfeile dienen nur der Veranschaulichung und sind nicht Teil der optischen Darstellung des Ausgabedisplays. Bei der Linkskurve ist erkennbar, dass von der linken Balkenanzeige 71 zwei der grünen Leuchtdioden aufleuchten, von der mittleren Balkenanzeige 72 die oberste grüne Leuchtdiode und von der rechten Balkenanzeige 73 die oberste grüne Leuchtdiode, sowie sämtliche gelben Leuchtdioden. Dies signalisiert das Durchfahren einer Linkskurve mit einem Umkipprisiko, das bereits etwas erhöht ist, aber noch nicht kritisch ist. Bei Geradeausfahrt wird durch den Block 78, in dem jeweils die oberste grüne Leuchtdiode jeder Balkenanzeige 71, 72, 73 aufleuchtet, ein sicherer Fahrzustand ohne nennenswerte Querbeschleunigung dargestellt. Die Darstellung bei einer Rechtskurve im Block 79 entspricht sinngemäß der Darstellung bei der Linkskurve, jedoch mit entsprechend vertauschter Reihenfolge der Darstellung der Balkenanzeigen 71, 72, 73.

## Patentansprüche

1. Verfahren zur Warnung des Fahrers eines Fahrzeuges (2, 3) vor einem drohenden Umkippen des Fahrzeugs (2, 3) um seine Längsachse, wobei eine Steuerungseinrichtung (13) die momentane Querbeschleunigung ($a_q$) des Fahrzeuges (2, 3) erfasst und hiervon abhängig ein Warnsignal bei drohendem Umkippen abgibt, wobei die Steuerungseinrichtung (13) das Warnsignal zusätzlich in Abhängigkeit von wenigstens einem von der Steuerungseinrichtung (13) im Fahrbetrieb des Fahrzeuges (2, 3) ermittelten kippkritischen Querbeschleunigungswert ($a_{q,Krit}$) abhängig macht, der ein Maß für die Querbeschleunigung des Fahrzeuges (2, 3) ist, bei der das Fahrzeug (2, 3) tatsächlich um seine Längsachse umkippen würde, wobei der kippkritische Querbeschleunigungswert ($a_{q,Krit}$) anhand des Fahrzeugverhaltens bei Kurvenfahrt von der Steuerungseinrichtung (13) automatisch ermittelt wird, wobei während einer Kurvenfahrt eine Testbremsung mit geringem Bremsdruck an wenigstens einem kurveninneren Rad (7, 8, 9) von der Steuerungseinrichtung (13) ausgelöst wird, bei der das wenigstens eine kurveninnere Rad (7, 8, 9) mit einer im Verhältnis zur höchstmöglichen Bremskraft geringen Bremskraft beaufschlagt wird, und das Raddrehgeschwindigkeitsverhalten wenigstens des einen mit der Testbremsung beaufschlagten Rades (7, 8, 9) für die adaptive Anpassung des kippkritischen Querbeschleunigungswertes ($a_{q,Krit}$) herangezogen wird, wobei als Warnsignal die momentane Querbeschleunigung ($a_q$) des Fahrzeuges (2, 3) bezogen auf den kippkritischen Querbeschleunigungswert ($a_{q,Krit}$) optisch dargestellt wird, wobei die momentane Querbeschleunigung ($a_q$) des Fahrzeuges (2, 3) bezogen auf den kippkritischen Querbeschleunigungswert ($a_{q,Krit}$) in der Art eines künstlichen Horizonts dargestellt wird.

2. Verfahren nach Anspruch 1, **dadurch gekennzeichnet, dass** der kippkritische Querbeschleunigungswert ($a_{q,Krit}$) durch die Steuerungseinrichtung (13) ausgehend von einem Anfangswert im Verlaufe einer oder mehrerer Kurvenfahrten des Fahrzeuges (2, 3) durch Auswertung wenigstens einer weiteren von der Steuerungseinrichtung (13) erfassten Eingangsgröße adaptiv angepasst wird.

3. Verfahren nach Anspruch 2, **dadurch gekennzeichnet, dass** der kippkritische Querbeschleunigungswert ($a_{q,Krit}$) im Verlaufe einer oder mehrerer Kurvenfahrten des Fahrzeuges (2, 3) erhöht wird.

4. Verfahren nach Anspruch 1, **dadurch gekennzeichnet, dass** der kippkritische Querbeschleunigungswert ($a_{q,Krit}$) um einen Stufenwert ($K_3$) erhöht wird, wenn festgestellt wird, dass die Testbremsung nicht zu einer charakteristischen Verringerung der Raddrehgeschwindigkeit wenigstens eines mit dem geringen Bremsdruck gebremsten Rades (7, 8, 9) führt.

5. Verfahren nach einem der vorhergehenden Ansprüche, **dadurch gekennzeichnet, dass** das Warnsignal als optisches und akustisches Signal ausgegeben wird.

6. Steuerungseinrichtung (13) mit einem Programm mit Programmcodemitteln, die eingerichtet ist zur Ausführung eines Verfahrens nach einem der vorhergehenden Ansprüche, wenn das Programm auf einem Rechner der Steuerungseinrichtung (13) ausgeführt wird.

## Claims

1. Method for warning the driver of a vehicle (2, 3) of a risk of overturning of the vehicle (2, 3) about its longitudinal axis, wherein a control device (13) detects the current lateral acceleration ($a_q$) of the vehicle (2, 3) and depending thereon outputs a warning signal if there is a risk of overturning, wherein the control device (13) additionally makes the warning signal dependent on at least one rollover-critical lateral acceleration value ($a_{q,Krit}$) determined by the control device (13) while the vehicle (2, 3) is travelling, the value being a measure of the lateral acceleration of the vehicle (2, 3) at which the vehicle (2, 3) would actually overturn about its longitudinal axis, wherein the rollover-critical lateral acceleration value ($a_{q,Krit}$) is automatically determined by the control device (13) using the vehicle behaviour when travelling round a turn, wherein during a traverse of a turn a test braking with low brake pressure is initiated on at least one wheel (7, 8, 9) on the inside of the turn by the control device (13), in which the at least one wheel (7, 8, 9) on the inside of the turn is subjected to a low brake force relative to the maximum possible brake force, and the wheel revolution rate behaviour at least of the one wheel (7, 8, 9) subjected to the test braking is used for the adaptive adjustment of the rollover-critical lateral acceleration value ($a_{q,Krit}$), wherein the current lateral acceleration ($a_q$) of the vehicle (2, 3) in relation to the rollover-critical lateral acceleration value ($a_{q,Krit}$) is visually displayed as a warning signal, wherein the current lateral acceleration ($a_q$) of the vehicle (2, 3) is displayed in relation to the rollover-critical lateral acceleration value ($a_{q,Krit}$) in the form of an artificial horizon.

2. Method according to Claim 1, **characterized in that** the rollover-critical lateral acceleration value ($a_{q,Krit}$) is adaptively adjusted by the control device (13) starting from an initial value during one or a plurality of traverses of turns by the vehicle (2, 3) by analysing at least one other of the input variables detected by the control device (13).

3. Method according to Claim 2, **characterized in that** the rollover-critical lateral acceleration value ($a_{q,Krit}$) is increased during one or a plurality of traverses of turns by the vehicle (2, 3).

4. Method according to Claim 1, **characterized in that** the rollover-critical lateral acceleration value ($a_{q,Krit}$) is increased by a step value ($K_3$) if it is determined that the test braking does not cause a characteristic reduction of the speed of rotation of at least one wheel (7, 8, 9) that is braked with the low brake pressure.

5. Method according to any one of the preceding claims, **characterized in that** the warning signal is output as a visual and/or audible signal.

6. Control device (13) with a program with program code means, which is arranged to implement a method according to any one of the preceding claims if the program is executed on a computer of the control device (13).

## Revendications

1. Procédé destiné à avertir le conducteur d'un véhicule (2, 3) que le véhicule (2, 3) est sur le point de se retourner sur son axe longitudinal, un dispositif de commande (13) détectant l'accélération transversale instantanée ($a_q$) du véhicule (2, 3) et délivrant, en fonction de celle-ci, un signal d'avertissement en cas de risque de retournement, le dispositif de commande (13) rendant également le signal d'avertissement dépendant d'au moins une valeur d'accélération transversale critique pour le retournement ($a_{q,Krit}$) qui est déterminée par le dispositif de commande (13) pendant le roulement du véhicule (2, 3) et qui est une mesure de l'accélération transversale du véhicule (2, 3) à laquelle le véhicule (2, 3) se retournerait réellement sur son axe longitudinal, la valeur d'accélération latérale critique pour le retournement ($a_{q,Krit}$) étant déterminée automatiquement par le dispositif de commande (13) sur la base du comportement de roulement du véhicule dans les virages, un freinage d'essai à faible pression de freinage étant déclenché dans un virage par le dispositif de commande (13) sur au moins une roue (7, 8, 9) située à l'intérieur du virage, freinage au cours duquel au moins une roue (7, 8, 9) située à l'intérieur du virage est soumise à une force de freinage inférieure à la force de freinage la plus élevée possible, et le comportement en termes de vitesse de rotation d'au moins une roue (7, 8, 9) soumise au freinage d'essai étant utilisé pour effectuer un réglage adaptatif de la valeur d'accélération transversale critique pour le retournement ($a_{q,Krit}$), l'accélération transversale instantanée ($a_q$) du véhicule (2, 3) par rapport à la valeur d'accélération transversale critique pour le retournement ($a_{q,Krit}$) étant représentée optiquement comme signal d'avertissement, l'accélération transversale instantanée ($a_q$) du véhicule (2, 3) étant représentée par rapport à la valeur d'accélération transversale critique pour le retournement ($a_{q.Krit}$) à la manière d'un horizon artificiel.

2. Procédé selon la revendication 1, **caractérisé en ce que** la valeur d'accélération transversale critique pour le retournement ($a_{q,Krit}$) est réglée de manière adaptative par le dispositif de commande (13) à partir d'une valeur initiale lors d'un ou plusieurs virages du véhicule (2, 3) par l'évaluation d'au moins une autre grandeur d'entrée détectée par le dispositif de commande (13).

3. Procédé selon la revendication 2, **caractérisé en ce que** la valeur d'accélération transversale critique pour le retournement ($a_{q,Krit}$) est augmentée lors d'un ou plusieurs virages du véhicule (2, 3).

4. Procédé selon la revendication 1, **caractérisé en ce que** la valeur d'accélération transversale critique pour le retournement ($a_{q,Krit}$) est augmentée d'une valeur d'incrément ($K_3$) s'il est déterminé que le freinage d'essai ne conduit pas à une réduction caractéristique de la vitesse de rotation d'au moins une roue (7, 8, 9) freinée avec la faible pression de freinage.

5. Procédé selon l'une des revendications précédentes, **caractérisé en ce que** le signal d'avertissement est délivré sous la forme d'un signal optique et acoustique.

6. Dispositif de commande (13) qui comporte un programme pourvu de moyens de code de programme et qui est conçu pour mettre en œuvre un procédé selon l'une des revendications précédentes lorsque le programme est exécuté sur un ordinateur du dispositif de commande (13) .

# Fig. 1

Fig. 2

# Fig. 3

Start — 30

$a_{q,1} > a_{q,Krit}$
und
$a_{q,2} > a_{q,Krit}$ — 31

nein

ja — 32

Räder 4, 5, 6, 7, 8, 9 mit Bremskraft $F_1$ beaufschlagen und ABS-Schlupf-signale für Räder 7, 8 sperren.

$V_7 + V_8 < K_1 * (V_4 + V_5)$
und
$d/dt \, (V_4 + V_5) < K_2$ — 33

nein

$a_{q,Krit} := a_{q,Krit} + K_3$ — 35

ja

34 — Räder 4, 5, 6 mit Bremskraft $F_2$ beaufschlagen

Ende — 36

Start —40

$$H := a_q / a_{q,Krit}$$ —41

Künstl. Horizont —42

$H > H_{Grenz}$ ? —43

ja

nein

44— Warnton

Ende —45

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6498976 B1
- EP 1104732 A2
- DE 19602879 C1
- DE 19907633 A1
- US 20080272899 A1
- WO 02074593 A1
- DE 10017045 A1